Europäisches Patentamt

European Patent Office

Office européen des brevets

(11) Publication number: **0 018 790**

**A1**

(12) # EUROPEAN PATENT APPLICATION

(21) Application number: **80301347.3**

(22) Date of filing: **24.04.80**

(51) Int. Cl.³: **B 62 D 53/08**

(30) Priority: **25.04.79 IE 377/79**

(43) Date of publication of application:
**12.11.80 Bulletin 80/23**

(84) Designated Contracting States:
**AT BE CH DE FR GB IT LI NL SE**

(71) Applicant: **O'Leary, William
9 Hillview
Carrigaline County Cork(IE)**

(72) Inventor: **O'Leary, William
9 Hillview
Carrigaline County Cork(IE)**

(74) Representative: **Borton, Guy Neville et al,
KILBURN & STRODE 30 John Street
London WC1N 2DD(GB)**

(54) **Improvements in couplings for articulated vehicles.**

(57) In an anti-jack-knifing arrangement between a tractor vehicle (101) and a trailer (102) wherein a turntable (110) is mounted on the tractor vehicle for rotation about a vertical axis and carries a brake member (114) for rotation therewith and having opposing horizontal parallel faces defining brake surfaces and brake callipers (115) are mounted on the tractor vehicle for operative engagement with such brake surfaces, while themselves being restrained from movement about the vertical axis; a fifth wheel coupling (118) having a socket to receive a coupling pin (119) on the trailer (102) is secured to the turntable (110) for rotation therewith, and adjustable trailer engaging members (125) are secured to the fifth wheel coupling (118) to engage with a portion (126) of the trailer and prevent relative rotation of the trailer (102) and the fifth wheel coupling (118).

EP 0 018 790 A1

Croydon Printing Company Ltd.

Fig.1.

Improvements in couplings for articulated vehicles

The present invention relates to improvements in couplings for articulated vehicles which prevent jack-knifing of the vehicle. The words "articulated vehicle" as used throughout this specification are intended to include any combination of a tractor vehicle connected by a coupling to a trailer.

Articulated vehicles of the semi-trailer type comprise a load-carrying trailer connected to and partially supported by a tractor vehicle by means of a coupling device which is commonly referred to as a fifth wheel coupling. The tractor vehicle conventionally comprises a chassis supported by at least two pairs of coaxial wheels, of which one pair are driven from a prime mover through a conventional automotive transmission, and the other coaxial pair are steerable from a driver's cab supported by the chassis. Vehicles of this category are particularly useful in that a single tractor vehicle can be utilized to transport a series of different trailers thereby saving the turnaround time which would otherwise be spent in loading and unloading the trailer.

Whilst articulated vehicles have well recognised merits, they have one common drawback in that the trailer is inclined to "jack-knife" during heavy deceleration, or on slippery surfaces. Jack-knifing occurs whenever the rear road wheels of the tractor vehicle are locked and skid in a direction transverse to the direction of travel so that the trailer swings about the fifth wheel coupling and tends to overtake the tractor vehicle. Jack-knifing can occur to such an extent that the trailer presses against the side of the tractor vehicle and pulls it around so that the complete articulated vehicle starts to spin in the fully articulated position. There are two distinct types of jack-knifing condition. In one type the front wheels of the tractor vehicle also lock and skid, and the whole vehicle tends to skid in a straight line provided the tyres of the tractor vehicle have similar frictional coefficients with the road, but as the speed drops, any slight lack of balance between the frictional coefficients becomes more noticeable

- 2 -

and the tractor vehicle will swing comparatively slowly but uncontrollably into the fully jack-knifed position. With the second and most dangerous type, the front wheels of the tractor vehicle do not skid and the slightest side force applied to the rear wheels of the tractor vehicle, which have been locked by a brake application, will suddenly cause a vicious jack-knifing condition. This particular type of instability is extremely difficult if not impossible to control and is the cause of a large number of fatal accidents due to the manner in which the trailer can sweep across the path of oncoming traffic. Another extremely dangerous condition known as "trailer swing" occurs when the trailer wheels lock and the trailer swings sideways about the fifth wheel coupling thereby obstructing either the pavement or another carriageway of the road.

In my British Patent Specification No. 1,295,045 and United States Patent Specification No. 3,874,699 I disclose an anti-jack-knifing device of a simple yet most efficient construction. That device essentially comprises a turntable mounted on the tractor vehicle for rotation about a substantially vertical axis intersecting the longitudinal centre line of the vehicle with a brake member carried by the turntable for rotation therewith and having opposing horizontal parallel faces defining brake surfaces. A fifth wheel coupling is secured to the turntable for rotation therewith and means is provided for connecting the trailer to the fifth wheel coupling so that the trailer is fast with the turntable for rotation therewith.

Brake callipers are mounted on the tractor vehicle so that they are restrained from movement about the aforestated vertical axis of rotation of the turntable. Such brake callipers are positioned for operational engagement with the brake surfaces at all articulated positions of the trailer relative to the tractor vehicle. The brake callipers are connected by suitable hoses to the fluid operated brake system of the tractor vehicle or can be connected to an independent fluid system operated by a servo-cylinder actuated by the braking system of the tractor vehicle.

Whenever the wheels of the trailer vehicle are braked, the brake callipers grip the brake surfaces and prevent articulation of the trailer relative to the tractor vehicle. The degree of braking torque applied to the brake surfaces by the brake callipers will depend upon the braking force applied to the wheels of the trailer vehicle so that the force applied by such brake callipers to prevent the trailer from jack-knifing will increase progressively with the deceleration of the entire articulated vehicle and with the transverse forces imposed on the trailer.

It has been found that the aforesaid device operates more efficiently when the brake surfaces are dry and so in my U.S. Patent Specification there is disclosed the improvement comprising the provision of an arcuate cover which is fitted to the turntable in a manner so as to completely overlie and enclose the brake surfaces and the associated brake callipers. In this way the brake surfaces and callipers are protected from the weather and are kept clean and dry so as to prevent any possibility of slippage between the brake callipers and the brake surfaces when braking is applied.

It will be appreciated that with the conventional fifth wheel coupling arrangement, the fifth wheel has a socket which receives a king pin fixed to the underside of the front of the trailer. The fifth wheel is provided with a pair of rearwardly extending ramps having inclined inner walls which define a V-shaped notch which serves to guide the king pin on the trailer into the socket on the fifth wheel. The king pin is locked in position in the socket by a latch which engages a reduced diameter portion of the king pin. Thus, with the conventional fifth wheel coupling articulation of the trailer occurs about the king pin which is free to rotate within the socket. With the device as described in my aforesaid Patent Specification it is essential to prevent the king pin from rotating in the socket and to ensure that the trailer is held fast with the turntable so that during use articulation of trailer will take place about the vehicle axis of the turntable. In the invention described in my aforesaid Patent Specifications this is achieved by means of a V-shaped wedge member which is secured to the trailer directly behind the king pin and which engages with the complementary V-shaped notch in the fifth wheel coupling plates, thus preventing the king pin from rotating relative to the fifth wheel.

While this locking arrangement operates very satisfactorily it does,
nevertheless, present some practical difficulties. Firstly, as explained above it is usual with articulated vehicles of the semi-
trailer type to utilize a single tractor to transport a series of
different trailers. Thus, if the tractor is fitted with the coupling
device of my aforesaid Specification each trailer must also be fitted
with a V-shaped wedge. Furthermore, it is not uncommon for a load-
carrying trailer to be moved by several different tractors during various stages of a journey and so it may well be the case that a tractor
fitted with the device of the invention may be called upon to move a
trailer not fitted with a V-shaped wedge. Finally, the V-shaped wedge
makes it more difficult to couple the tractor with the trailer because
the fifth wheel coupling has to be carefully aligned with the wedge
to enable it to enter the V-notch in the fifth wheel.

It is thus an object of the invention to provide an anti-jack-knifing
device on a tractor vehicle which can be coupled with a conventional
king pin arrangement of a trailer and which includes means on the tractor vehicle for locking the turntable to the trailer without the need
for any special fittings on the trailer.

Accordingly, the invention provides a coupling for connecting a tractor
vehicle to an articulated trailer so as to prevent jack-knifing of the
trailer comprising a support means secured to the rear of the tractor
vehicle; a bearing support carried by the support means; bearing means
mounted on the bearing support; a turntable supported by the support
means for rotation about a substantially vertical axis intersecting the
longitudinal centre line of the vehicle and rotatably mounted on the
bearing means and supported thereby for rotation; a brake member carried
by the turntable for rotation therewith and having opposing parallel
faces defining brake surfaces; at least one brake calliper mounted on
the tractor vehicle to be restrained from movement about said vertical
axis and positioned for operative engagement with said brake surfaces
at all articulated positions of the trailer relative to the tractor vehicle whereby upon actuation of the brake calliper articulation of the trailer relative to the tractor vehicle is resisted; means operatively carried by the support means and the turntable for preventing axial movement of the turntable relative to the support means; a fifth wheel coupling secured to the turntable for rotation therewith and having a socket adapted to receive a coupling pin on the trailer; a transverse horizontal pivot means operatively connected between the turntable and the fifth wheel coupling to permit the trailer to rise and fall relatively to the tractor vehicle when passing over a surface of varying grade, wherein the fifth wheel coupling is provided with clamp means adapted for clamping on to the trailer such that the fifth wheel is held fast with the trailer and the coupling pin of the trailer is prevented from rotating within the socket of the fifth wheel. Preferably, the clamping means comprises at least one clamp connected to each opposed lateral side of the fifth wheel, each clamp being adapted to engage with a portion of the chassis of the trailer. Suitably, there are a pair of clamps attached to each side of the fifth wheel, each clamp being pivotally connected to the fifth wheel, and the clamps of each pair are interconnected by link means. The clamps may be screw or toggle-type clamps or may be operated by hydraulic or pneumatic means.

In another embodiment the trailer engaging means comprises a frame secured to the fifth wheel for rotation therewith, and at least one buffer arm extending forwardly of, and being longitudinally adjustable, relative to, said frame, and a buffer carried on said buffer arm and being adapted to engage with the front of the trailer so as to prevent relative rotation of the trailer and fifth wheel. Preferably, the frame comprises two longitudinal tubular members one of which is connected to each lateral side of the fifth wheel, a buffer arm slidable within each tubular member and extending forwardly of the fifth wheel, spring means for urging the buffer arms rearwardly towards the fifth wheel, means for locking the buffer arms relative to the tubular members, and a buffer on that end of each buffer arm remote from the fifth wheel, the buffers being adapted to engage with the front of the trailer so as to prevent relative rotation of the trailer and fifth wheel.

In the construction described in my aforesaid Patent Specifications, the brake member carried by the turntable has opposed horizontal parallel faces defining the brake surfaces and the brake callipers are also disposed horizontally. This has the result that the braking disc must be of relatively large diameter to ensure sufficient braking torque and furthermore means must be provided to enable the brake callipers to rise and fall with any movement of the brake disc.

In accordance with a second aspect of the invention, the turntable is formed along its periphery with an annular flange which extends in a vertical plane parallel to the axis of rotation of the turntable, said flange having opposed vertical parallel faces defining said brake surfaces, and at least one brake calliper is mounted on the tractor vehicle to be restrained from movement about said vertical axis and positioned for operative engagement with said brake surfaces at all articulated positions of the trailer relative to the tractor vehicle whereby upon actuation of the brake calliper articulation of the trailer relative to the tractor is resisted. Preferably, the annular flange forming the brake surfaces extends downwardly from the periphery of the turntable, such that the turntable is of inverted dish-shape. This arrangement has the advantage that the brake callipers act in a vertical plane and so can be positioned beneath the turntable where they are protected from damage and from the weather. Furthermore, adequate braking torque can be obtained without increasing the overall diameter of the turntable thus rendering the device more compact. A further advantage is that because the brake callipers are disposed vertically, the brake surface is free to move vertically between the brake pads (when the brakes are not in operation) without any damage being caused to the callipers. Furthermore, the dished shape gives added strength to the turntable as distinct from a flat shape.

A further problem associated with anti-jack-knifing devices of the kind described in my aforesaid Patent Specification is that in very cold conditions the brake callipers and braking disc have a tendency to freeze. Thus, in accordance with yet a further aspect of the invention means are provided for heating the brake surfaces and/or the brake callipers. In a preferred embodiment exhaust gases from the tractor engine are used in said heating means. The hot exhaust gases are preferably fed to a duct or ducts located beneath the turntable.

Some embodiments of the invention are hereinafter described with reference to the accompanying drawings, wherein:

Figure 1 is a sectional elevation of one embodiment of a coupling device according to the invention;
Figure 2 is a side elevation, partly in section, of a second embodiment of a coupling device according to the invention;
Figures 3 and 4 are enlarged detailed sections of further embodiments;
Figure 5 is a general arrangement of yet a further embodiment of the invention;
Figure 6 is an outline side view of the embodiment of Figure 5;
Figure 7 is a detailed side view of the buffers of Figures 5 and 6; and
Figure 8 is a cross-section showing the locking arrangement of Figure 6.

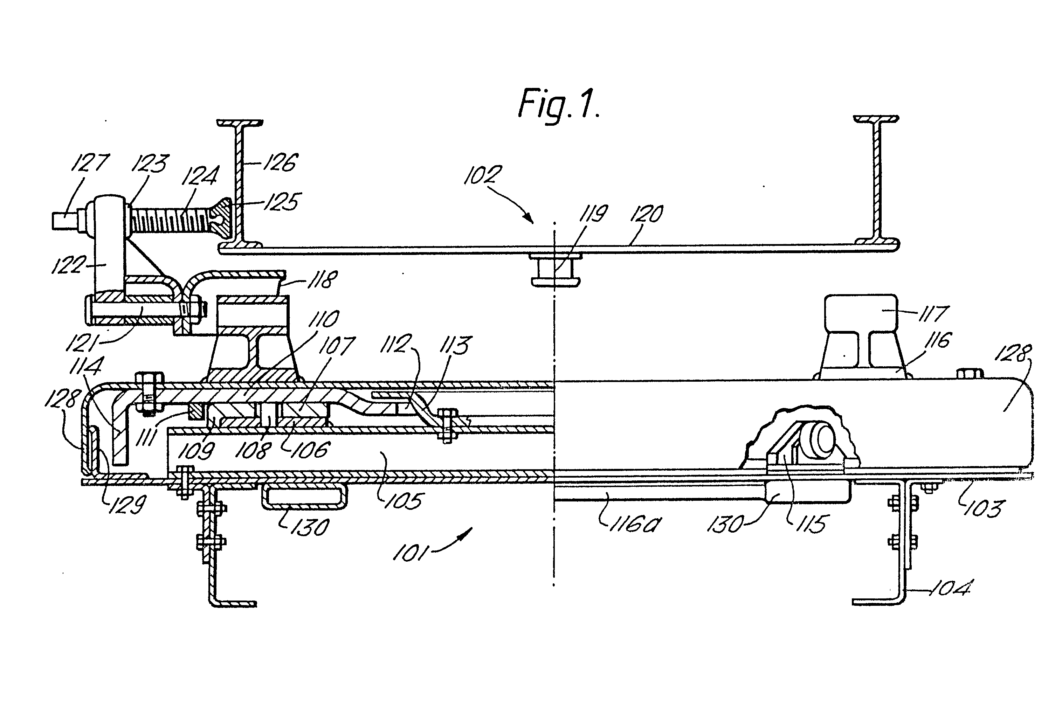

With reference to Figure 1 of the drawings, a coupling for connecting a tractor vehicle, generally designated 101, to an articulated trailer, generally designated 102, comprises a shield plate 103 secured to the chassis members 104 of the tractor. A base support member 105 is positioned on top of the shield plate and is bolted to the chassis members 104 by bolts which pass through the shield plate. The base support member 105 carries an annular bearing support 106 which is fixed to the base support member 105. A bearing ring 107 is fixed to the upper surface of the support 106 by dowels 108. The bearing ring is L-shaped in cross-section and may be made from nylon or other suitable material. Graphite-impregnated nylon of the kind sold under the trade name "ERTALON" has been found suitable. The vertical shorter leg 109 of the L-shaped bearing ring extends downwardly to cover the radially outer peripheral side wall of the annular bearing support 106. A generally flat circular turntable 110 is mounted for rotation on the bearing ring 107 about a substantially vertical axis intersecting the longitudinal centre line of the tractor. A circular retaining ring 111 is fixed to the underside of the turntable 110 to prevent axially inward movement of the turntable. The ring 111 bears against the shorter leg portion 109 of the bearing ring 107. The turntable is formed with a central circular aperture 112, the peripheral edges of which are located beneath a flanged annular retaining plate 113 which is bolted to the base support plate 105 and which prevents the turntable from lifting up off the bearing ring 107.

The turntable 110 is formed with an annular flange which extends downwardly from the periphery of the turntable and lies in a plane parallel to the axis of rotation of the turntable. The opposed surfaces of the flange are machined to form a braking disc 114. The braking disc 114 rotates between a plurality of brake callipers 115 which constitute a brake means and are equally spaced about the turntable. These brake callipers are of any convenient type such as those commonly used for the disc brakes of vehicle wheels, and may be connected by their respective brake hoses to the fluid operated brake system of the tractor vehicle.

Alternatively, the brake callipers 115 can be connected by their hoses to an independent fluid system operated by a servo cylinder actuated by the braking system of the tractor vehicle. This is particularly convenient when the tractor vehicle has a pneumatic braking system and the brake callipers are to be operated by brake fluid. Desirably alternate pairs of the callipers are connected to separate fluid circuits to minimise the risk of failure.

It will therefore be appreciated that, whenever the wheels of the tractor vehicle are braked, the brake callipers will grip the disc 114 and prevent articulation of the trailer. The degree of braking torque applied to the brake disc 114 will depend upon the braking force applied to the wheels of the tractor vehicle and thus to the deceleration of the entire vehicle. Accordingly it will be seen that the force applied by the brake callipers to maintain the articulated portion in its proper position will increase progessively with the deceleration of the articulated vehicle and with the transverse forces generated on the trailer which would otherwise cause a dangerous jack-knifing condition. If desired, valve means could be arranged between the brake hoses and the vehicle braking system whereby the callipers would only become operative after a predetermined pressure has been achieved in the vehicle braking system. This predetermined pressure could be arranged such that the brake callipers
will only become operative just before the deceleration of the vehicle
reaches the point where a jack-knifing condition might be imminent.
In this manner, the trailer would remain manoeuvrable about the articulation axis provided by the turntable 110, during ordinary deceleration, but would become locked to the tractor vehicle immediately prior
to the initiation of a jack-knifing condition.

If desired, the brake hoses can be supplied with brake fluid by means
of a separate master cylinder operated by the main brake pedal.

The brake callipers are firmly attached to the base support plate 105.
Because the brake pads of the callipers are vertically aligned they can
rise and fall relative to the disc 114 without being damaged.

A pedestal 116 is bolted to the top surface of the turntable 110 and
contains a pair of trunnion bearings 117 which receive horizontal pivot
pins of a conventional fifth wheel plate 118, a portion only of which
is shown in Figure 1. The fifth wheel is thus rotatable with the turn-
table 110, and the trunnion bearings allow the trailer to rise and fall
relative to the tractor. Furthermore, the transverse horizontal axis
of rotation of the trunnions always remains exactly transverse to the
trailer irrespective of its angle of inclination so that the trailer can
rise and fall about a true horizontal axis when passing over a surface
of varying gradients.

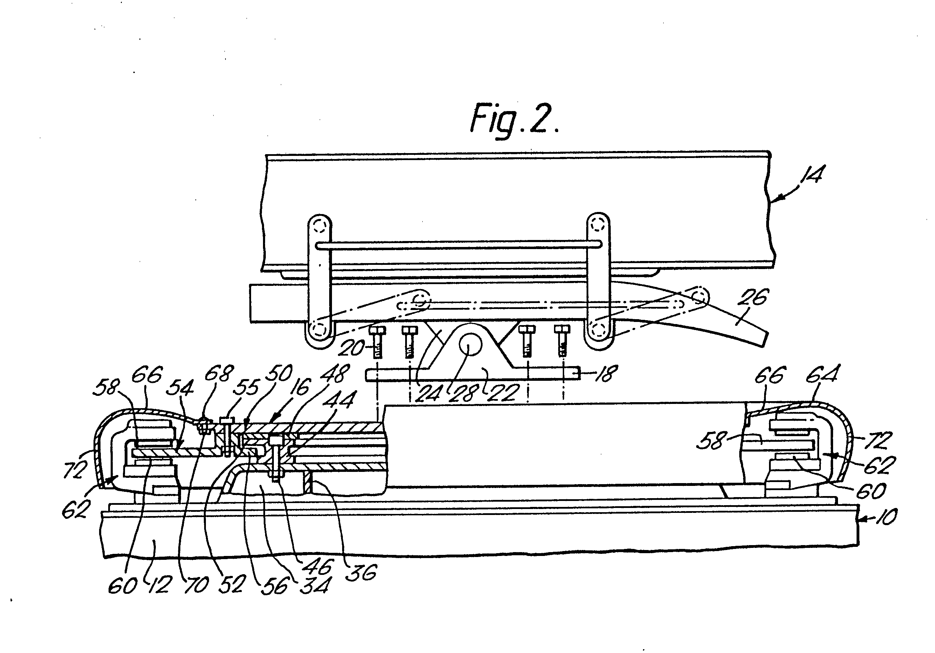

The fifth wheel coupling 118 is provided with the conventional socket
for receiving the trailer king pin 119 which is secured to the front
underside of the articulated trailer 102 through a wear plate 120. A
pair of ramps (not shown) at the rear of the fifth wheel coupling co-
act with the wear plate 120 and serve to transfer the weight of the
front end of the trailer on to the rear of the tractor vehicle. The
ramps have inclined inner walls defining a V-notch which serves to
guide the king pin 119 into its socket where it is locked into position by a latch engaging a reduced diameter portion of the king pin.
However, if the fifth wheel coupling is allowed to operate in its usual
fashion articulation will occur about the king pin 119 instead of the turntable 120. This is prevented by means of the clamping means of the invention comprising four clamps, only one of which is shown in Figure 1. Preferably, the clamps are arranged in pairs, one pair to each lateral side of the fifth wheel. A pin 121 is bolted to the fifth wheel and an arm 122 of the clamp is pivotably attached to the pin 121. The arm 122 is journalled at its end to receive an internally threaded bearing 123 which is in screwthreaded engagement with an externally threaded shank 124 which carries at its end a clamping pad 125. Preferably, the clamps in each pair are interconnected by a link (see Figure 2) and when the tractor vehicle is not attached to a trailer the clamps pivot downwardly to lie alongside the fifth wheel. However, when the tractor is coupled to the trailer the clamps can be pivoted upwardly so that clamping pad 125 is opposite the side of the trailer chassis member 126. The clamps are then tightened against the chassis member by turning a head 127 of the shank 124. In this way the fifth wheel is held fast to the trailer without the need for any special fittings on the trailer. It will be appreciated that the clamps could conveniently be operated by hydraulic or pneumatic means. The braking disc 114 and the callipers 115 are protected from the weather by means of a cover 128 which is turned downwardly to cover the downwardly depending annular flange comprising the braking disc 114. The cover 128 is in overlapping engagement with an upstanding annular cover portion 129 which is fixed to the shield 103.

An enclosed box-section 130 is disposed beneath each brake calliper 115 and serves the dual purpose of acting as a support for the calliper and as a heating duct. The ducts 115 are interconnected by piping 116a which is connected by a bleed pipe and venturi arrangement to the exhaust outlet of the tractor engine. In this way hot exhaust gases can be passed through the ducts 130 to heat the brake callipers 115 and the brake disc 114 and so prevent icing of the braking system, maintaining it in a dry damp-free condition.

Referring now to the embodiment shown in Figures 2 to 4 this illustrates a coupling of the kind described in my U.S. Patent Specification No. 3,985,369 except that it has been fitted with clamping means of the present invention.

In Figure 2, the reference numeral 10 generally designates a conventional tractor vehicle, which has longitudinal frame bars 12. A load carrying trailer, generally designated by reference numeral 14, is adapted to be connected to the tractor vehicle.

The coupling means includes a turntable 16, which is in the form of a flat plate that is rotatably mounted on the tractor vehicle, in a manner to be described, so that it is supported for rotation about a substantially vertical axis intersecting the longitudinal centre line of the tractor vehicle. The turntable 16 is adapted to receive a pedestal 18, which is fastened thereon by bolts 20 and which is formed with spaced ears or lugs 22. The depending boss 24 of a fifth wheel 26 is adapted to be pivotally mounted between the ears by a horizontal pivot pin 28. The fifth wheel 26 is formed with a cut-out portion 30 and is adapted to receive coupling means carried by the underside of the front of the trailer 14, as more specifically dislosed in relation to Figure 1. The means for clamping the fifth wheel 26 to the trailer chassis is as described in relation to Figure 1 and comprises screw, pneumatic or hydraulic clamps 122 interconnected by a link 130. A similar pair of clamps are positioned to the opposite lateral side of the fifth wheel 26.

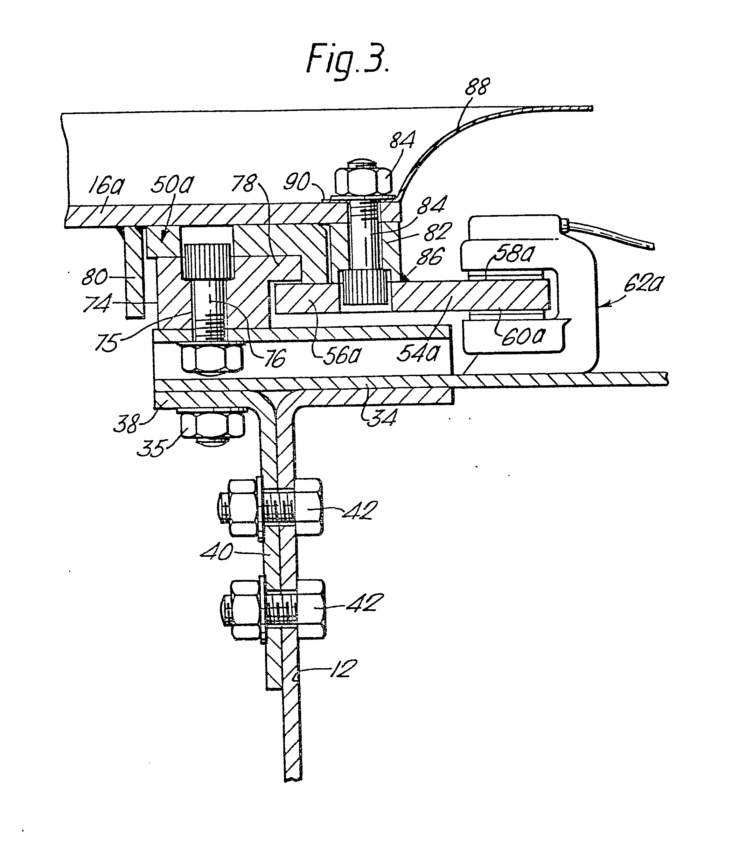

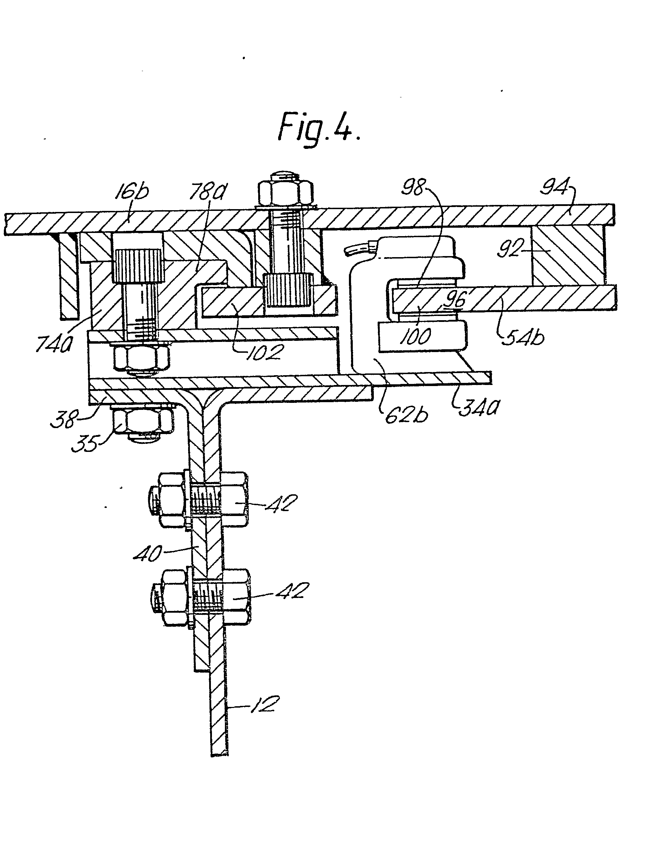

The turntable is rotatably mounted on a base or support plate 34 which may be corrugated or pressed and which is provided with a reinforcing rib 36. The base plate 34, as shown more particularly in Figures 3 and 4, is affixed by bolt means 35 to the horizontal legs 38 of angle plates 40 which are secured by bolt means 42 to the vertical sections of the frame bars 12.

A machined retaining ring 44 is fastened by suitable bolt means 46, such as Allen cap screws, to the top of the annular base or support plate 34 with suitable openings being provided in such elements for the reception of the bolt means. The horizontal leg 48 of an L-shaped nylon bearing ring 50 is supported on the retaining ring and the vertical leg 52 thereof is disposed outwardly of the retaining ring. The horizontal and vertical portions of the bearing ring 50 radially and horizontally support the turntable 16 for free rotation about its vertical axis.

A brake member 54, which is in the form of an annular flat disc is fixed by bolt means 55 to the underside of the turntable. The brake disc has an inner edge portion 56 which co-operates with the retaining ring to prevent axial movement of the turntable relative to the support means that is constituted by the support plate 34. The outer edge portion of the brake member constitutes the brake and the opposing horizontal parallel faces 58 and 60 thereof define brake surfaces.

Brake callipers 62 are mounted on the base plate at spaced apart positions, preferably in front and rear pairs. The brake callipers 62 are mounted on the support plate 34 to be restrained from movement about the vertical axis of the turntable and are positioned for operative engagement with the brake surfaces 58 and 60 at all articulated positions of the trailer relative to the tractor vehicle, whereby upon actuation of the brake callipers articulation of the trailer relative to the tractor vehicle is resisted. The brake callipers are connected by suitable hose means (not shown) to the fluid operated brake system of the tractor vehicle or to an independent fluid system operated by a servo cylinder actuated by the brake system of the tractor vehicle.

An annular cover 64, which is arcuate in cross-section, is provided and has a substantially horizontal section 66 that terminates at its inner end in a mounting flange 68 which is fastened by bolt means 70 to the circumferential edge portion of the turntable radially outwardly of the bolt means 55. The horizontal section 66 extends beyond the brake callipers and the cover has a vertical depending section 72 which extends downwardly around the brake callipers in radially downwardly spaced relation thereto. The vertical section 72 extends downwardly to a point almost reaching the mounting plate of the brake callipers and encompasses or encloses the brake callipers completely.

It can be appreciated that the cover 64 completely overlies and covers the brake surfaces and the brake callipers so as to prevent rain, snow and the like elements from coming into contact therewith. Thus; the cover keeps the brake surface and the associated brake callipers dry and clean whereby positive gripping action is ensured and any possible slippage between the brake callipers and the brake surface is completely obviated.

In the embodiment of Figure 3, the retaining ring 74 is in the form of a block having a series of vertical apertures 75 for the reception of bolt means 76 whereby the ring is mounted on the support plate 34. The retaining ring has a radially inwardly extending lip 78 provided on its upper portion and the ring supports the L-shaped bearing ring 50a with a turntable 16a being mounted for rotation on the horizontal portion of the bearing ring. The turntable has a depending rib 80 which is disposed at the inner end of the horizontal portion of the bearing ring and which radially supports the bearing ring platform. Also, a spacer sleeve 82 is affixed by bolt means 84 to the underside of the circumferential edge portion of the turntable and serves to radially support the turntable in connection with the vertically dependent portion of the bearing ring, as can be appreciated from a consideration of Figure 3.

The brake member 54a, which is in the form of a disc plate, is welded as at 86 to the underside of the spacer sleeve 82 and the inner edge portion 56a defines a lip that underlies the lip 78 so that the lips are in overlapping relation whereby axial movement of the turntable relative to the support plate 34 is prevented. The brake callipers 62a are mounted on the support plate and engage the brake surfaces 58a and 60a of the brake member in the same manner as in the form of Figure 2.

An arcuate cover 88 is provided at its inner end with a lateral mounting flange 90 and is affixed by the bolt means 84 to the top of the circumferential edge portion of the turntable 16a. The cover extends outwardly and upwardly from the circumferential edge portion of the turntable in a manner so as to overlie the brake callipers and the brake surfaces, as shown in Figure 3.

The structural mounting of the turntable 16b in the embodiment of Figure 4 is the same as that disclosed in connection with the turntable 16a of Figure 3. However, in the embodiment of Figure 4, the brake member 54b is attached by vertical spacer members 92 to the underside of the circumferential edge portion 94 of the turntable 16b and is positioned therebelow in vertically spaced relation therewith. The inner edge portion 96 of the brake member constitutes the brake means and has opposing parallel horizontal faces 98 and 100 which define the brake surfaces. The brake surfaces, as can be appreciated from Figure 4, underlie the turntable and are completely protected thereby in vertically spaced relation therewith. The brake callipers 62b are mounted on the support member 34a so that they are inboard of the brake member and are restrained from moving about the vertical axis of the turntable and are positioned for operative engagement with the brake surface 98 and 100 at all articulated positions of the trailer relative to the tractor vehicle. The underlying positioning of the brake surfaces below the turntable ensures that the brake surfaces and brake callipers will be fully and completely protected from the elements. Thus, the turntable itself constitutes a cover means for the brake surfaces and the brake callipers.

In the embodiment of Figure 4, a retaining member 102 is welded to the spacer 82a and is adapted to co-operate with the overhanging lip 78a on the retaining ring 74a, in lieu of the inner edge portion of the brake member, as shown in the embodiment of Figure 3.

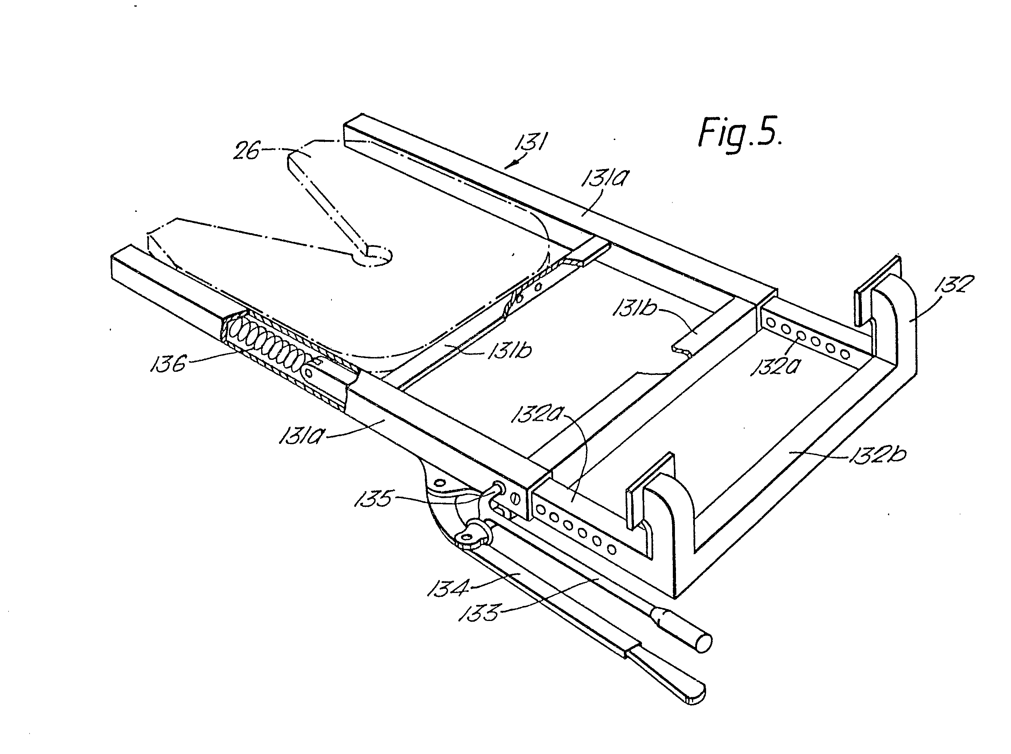

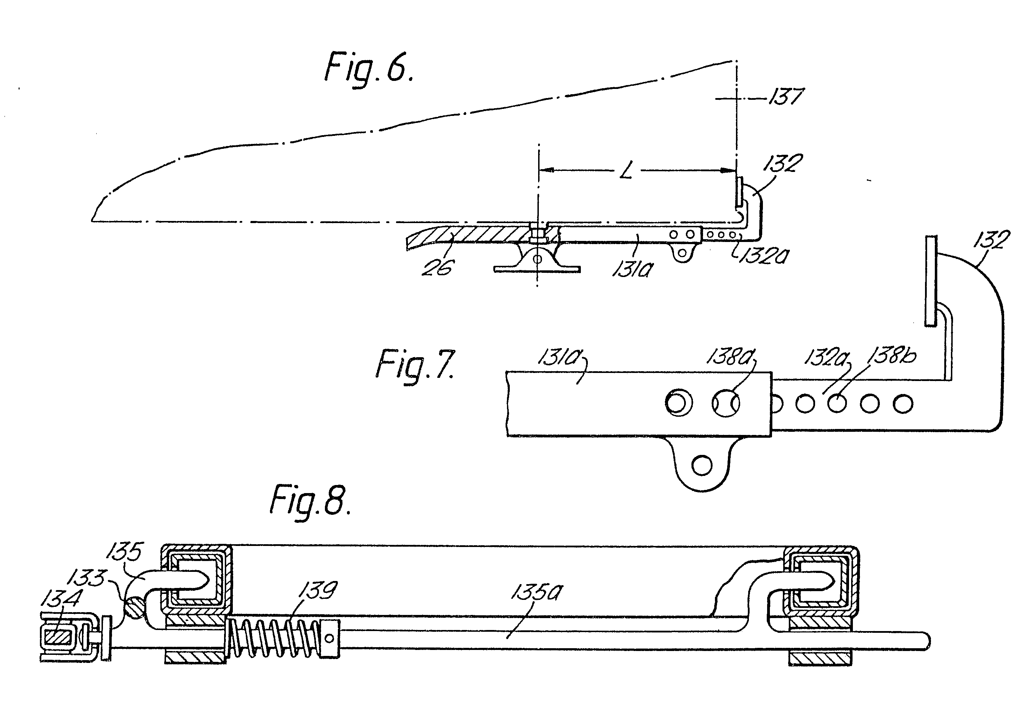

An alternative embodiment of the invention for preventing articulation of the trailer about the king pin 119 is shown in Figures 5 to 8. A locking frame 131 is bolted to the fifth wheel coupling 26 and consists of two longitudinal tubular members 131a each connected to a lateral side of the fifth wheel, and jointed by cross members 131b. The rearmost cross member 131b is also bolted to the front of the fifth wheel coupling 26. Buffers 132 are mounted on longitudinal members 132a which slide within the tubular members 131a. The buffers 132 are joined by a cross member 132b. The members 132a are connected by tension springs 136 to the members 131a, so that the buffers 132 are urged towards the frame 131.

In use, when a trailer is engaged with the fifth wheel coupling 26, the front of the trailer pushes the buffers 132 forwardly, away from the locking frame 131. The buffers are held pressed against the front of the trailer 37 by the action of the tension springs 136. The positions of the buffers with respect to the locking frame 131 can therefore be varied to suit different values of the dimension L from the king pin to the front of the trailer.

A locking arrangement is provided to secure buffers 132 in position against the front of the trailer 137 when the king pin has been positioned in the fifth wheel coupling and the buffers have taken up their positions against the front of the trailer 137. The members 132a are provided with spaced holes 138a, while each of the members 131a has a pair of spaced holes 138b. The pitch of the holes 138a is less than the spacing of the holes 138b so that regardless of the positions of the members 132a with respect to members 131a, one or other of holes 138b in each member 131a will be sufficiently well aligned with a hole 138a for a locking pin 135 to be inserted through both holes and thus secure the member 132a with respect to the member 131a. Two locking pins 135 are provided, one for each pair of members 131a and 132a and the pins are formed on a locking bar 135a. A compression spring 139 is arranged to urge the bar 135a in such a direction as will tend to insert and hold the pins 135 in the holes 138a and 138b.

Two levers 133 and 134 are provided to operate the locking arrangement. Lever 133 is moved in a vertical plane to rotate the bar 135a and thus position the pins 135 opposite those of the holes 138a with each of which a hole 138b is best aligned and into which the pins should be inserted. The lever 134 is used to withdraw the pins 135 from the holes B and C when it is required to carry out an adjustment of the positions of the buffers 132. The springs 136 and 139 are of strengths such that the pins 135 move easily into the selected holes 138a and 138b with the members 132a adjusting their positions accordingly.

The buffers 132 may be faced with a suitable resilient material, such as rubber.

CLAIMS

1.  A coupling for connecting a tractor vehicle (101) to an articulated trailer (102) so as to prevent jack-knifing of the trailer comprising bearing means (107) mounted to the rear of the tractor vehicle, a turntable (110) for rotation about a substantially vertical axis intersecting the longitudinal centre line of the vehicle (101) and rotatably mounted on the bearing means (107) and supported thereby for rotation; a brake member (114) carried by the turntable (110) for rotation therewith and having opposed parallel faces defining brake surfaces, at least one brake calliper (115) mounted on the tractor vehicle to be restrained from movement about said vertical axis and positioned for operative engagement with said brake surfaces at all articulated positions of the trailer relative to the tractor vehicle whereby upon actuation of the brake calliper (115) articulation of the trailer (102) relative to the tractor vehicle (101) is resisted, a fifth wheel coupling (118) secured to the turntable for rotation therewith and having a socket adapted to receive a coupling pin (119) on the trailer (102), a transverse horizontal pivot means (117) operatively connected between the tractor vehicle (101) and the fifth wheel coupling (118) to permit the trailer to rise and fall relatively to the tractor vehicle when passing over a surface of varying grade, and trailer engaging means secured to the fifth wheel coupling for rotation therewith, said engaging means including at least one adjustable trailer engaging member (125) adapted to engage with a portion (126) of the trailer to prevent relative rotation of the trailer (102) and the fifth wheel coupling (118).

2.  A coupling as claimed in claim 1, wherein the trailer engaging means comprises at least one adjustable clamp (124) secured to each opposed lateral side of the fifth wheel coupling (118) and each clamp being adapted to engage with a portion (126) of the trailer.

3.  A coupling as claimed in claim 2, wherein the trailer engaging means comprises a pair of clamps (124) secured to each opposed lateral side of the fifth wheel (118), each clamp being pivotally (121) connected to the fifth wheel and the clamps of each pair being interconnected by link means.

4.   A coupling as claimed in claim 1, wherein the trailer engaging means comprises a frame (131) secured to the fifth wheel (26) for rotation therewith, and at least one buffer arm (132a) extending forwardly of, and being longitudinally adjustable, relative to, said frame (131), and a buffer (132) carried on said buffer arm (132a) and being adapted to engage with the front of the trailer (137) so as to prevent relative rotation of the trailer and fifth wheel (26).

5.   A coupling as claimed in claim 4, wherein the frame comprises two longitudinal tubular members (131a) one of which is connected to each lateral side of the fifth wheel (26), a buffer arm (132a) slidable within each tubular member (131a) and extending forwardly of the fifth wheel (26), spring means for urging the buffer arms (132a) rearwardly towards the fifth wheel (26), means (135) for locking the buffer arms (132a) relative to the tubular members (131a), and a buffer (132) on that end of each buffer arm (132a) remote from the fifth wheel (26), the buffers (132) being adapted to engage with the front of the trailer (137) so as to prevent relative rotation of the trailer and fifth wheel (26).

6.   A coupling for connecting a tractor vehicle (101) to an articulated trailer (102) so as to prevent jack-knifing of the trailer comprising bearing means (107) mounted to the rear of the tractor vehicle, a turntable (110) for rotation about a substantially vertical axis intersecting the longitudinal centre line of the vehicle (101) and rotatably mounted on the bearing means (107) and supported thereby for rotation, a brake member carried by the turntable (110) for rotation therewith and comprising an annular flange (114) on said turntable extending parallel to the axis of rotation of the turntable, said flange (114) having opposed vertical parallel faces defining brake surfaces, at least one brake calliper (115) mounted on the tractor vehicle to be restrained from movement about said vertical axis and positioned for operative engagement with said brake surfaces at all articulated positions of the trailer relative to the tractor vehicle whereby upon actuation of the brake calliper (115) articulation of the trailer relative to the tractor vehicle is resisted, a fifth wheel coupling (118) secured to the turntable for rotation therewith and having a socket adapted to receive a coupling pin (119) on the trailer, a transverse horizontal pivot means (117) operatively connected between the tractor vehicle (101) and the fifth wheel coupling (118) to permit the trailer to rise and fall relatively to the tractor vehicle when passing over a surface of varying grade, and means for connecting the fifth wheel coupling to the trailer to prevent relative rotation of the trailer and the fifth wheel coupling.

7. A coupling as claimed in claim 6, wherein the annular flange (114) extends downwardly from the periphery of the turntable (110) such that the turntable is of inverted dish-shape.

8. A coupling for connecting a tractor vehicle (101) to an articulated trailer (102) so as to prevent jack-knifing of the trailer comprising bearing means (107) mounted to the rear of the tractor vehicle, a turntable (110) for rotation about a substantially vertical axis intersecting the longitudinal centre line of the vehicle (101) and rotatably mounted on the bearing means (107) and supported thereby for rotation; a brake member (114) carried by the turntable for rotation therewith and having opposed parallel faces defining brake surfaces, at least one brake calliper (115) mounted on the tractor vehicle to be restrained from movement about said vertical axis and positioned for operative engagement with said brake surfaces at all articulated positions of the trailer relative to the tractor vehicle whereby upon actuation of the brake calliper (115) articulation of the trailer relative to the tractor vehicle is resisted, a fifth wheel coupling (118) secured to the turntable for rotation therewith and having a socket adapted to receive a coupling pin (119) on the trailer, a transverse horizontal pivot means (117) operatively connected between the tractor vehicle (101) and the fifth wheel coupling (118) to permit the trailer to rise and fall relatively to the tractor vehicle when passing over a surface of varying grade, means for connecting the fifth wheel coupling to the trailer to prevent relative rotation of the trailer and the fifth wheel coupling, and heating means (116a, 130) for applying heat to the brake surfaces and/or the brake calliper (115).

9.  A coupling as claimed in claim 8 in which said heating means comprises at least one duct (116a) located beneath the turntable (110), and connecting means connecting said duct or ducts (116a) to an exhaust system of the tractor vehicle engine such that hot exhaust gases may be used to heat the brake surfaces.

Fig.1.

## Fig.2.

Fig.3.

Fig.4.

Fig.5.

26

131

131a

131b

131b

132

132a

132a

136

135

134

133

131a

132b

5|6

0018790

Fig.6.

Fig.7.

Fig.8.

European Patent Office

**EUROPEAN SEARCH REPORT**

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate. of relevant passages | Relevant to claim | |
| D | US - A - 3 985 369 (W. O'LEARY)<br>* claims; fig. *<br>-- | 1,6,8 | B 62 D 53/08 |
| D | US - A - 3 874 699 (PH. HAYES et al.)<br>* claims; fig. *<br>& GB - A - 1 295 045<br>-- | 1,6,8 | |
| | US - A - 3 774 941 (H.H. DURR)<br>* column 4, lines 26 to 48; fig. 1 to 5 *<br>-- | 1,6,8 | TECHNICAL FIELDS SEARCHED (Int.Cl.³) |
| | US - A - 4 065 149 (B.E. ROTH)<br>* fig. *<br>-- | 1,6,8 | |
| | US - A - 3 722 918 (E.W. CONNER)<br>* fig. *<br>---- | 1,6,8 | B 60 D 7/00<br>B 62 D 53/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Berlin | Date of completion of the search<br>25-07-1980 | Examiner<br>LEITZ |

EPO Form 1503.1 06.78